# EUROPEAN PATENT SPECIFICATION

(11) **EP 2 634 455 B1**
(45) Date of publication and mention of the grant of the patent: **18.03.2020**
(21) Application number: 11835918.1
(22) Date of filing: 27.07.2011
(51) Int. Cl.: B66F 3/06, F16G 13/20, F16H 19/06

(54) **ENGAGEMENT CHAIN TYPE DEVICE FOR FORWARD AND BACKWARD MOVEMENT OPERATION**
VORRICHTUNG MIT EINER EINGREIFKETTE FÜR EINEN BETRIEB MIT VOR- UND RÜCKWÄRTSBEWEGUNG
DISPOSITIF DU TYPE À CHAÎNE D'ENGRENAGE POUR DÉPLACEMENT VERS L'AVANT ET L'ARRIÈRE

(30) Priority: 27.10.2010 JP 2010241372
(43) Date of publication of application: 04.09.2013
(73) Proprietor: Tsubakimoto Chain Co., Osaka-shi, Osaka 530-0005 (JP)
(72) Inventor: SAJI, Tomoyuki, Osaka-shi Osaka 530-0005 (JP); TAKEUCHI, Yoshifumi, Osaka-shi Osaka 530-0005 (JP)
(74) Representative: Westphal, Mussgnug & Partner Patentanwälte mbB
(86) International application number: PCT/JP2011/067032
(87) International publication number: WO 2012/056777

(56) References cited:
- EP-A2- 2 000 426
- JP-A- 56 093 697
- JP-A- 61 002 960
- JP-A- 2007 205 516
- JP-A- 2009 115 106
- US-A- 2 574 657
- US-A1- 2010 229 469

## Description

The present invention relates to an engagement chain type advance/retract actuator used in manufacturing facilities in various manufacturing fields, transfer facilities in the transportation field, nursing-care facilities in medical and welfare fields, and stage facilities in artistic fields, etc., and used in advancing and retracting a driven body. Conventionally, engagement chain type advance/retract actuators include engagement chain type lifting apparatuses that move a driven object such as a lifting table by using a pair of engagement chains engaged with each other and integrally driven, so called, zipper chains.

There are some conventional engagement chain type lifting apparatuses of this kind that prevent vibration propagated to the lifting table by providing a mounting means connecting the pair of engagement chains and the lifting table with each other (for example, see Patent Document 1).

Further, there are some stock conveyors in which a bending prevention member is provided to a chain and a telescopic shaft is housed in a hollow part, thereby supporting the chain and increasing the strength of the chain (for example, see Patent Document 2).

Further, there are some accordion door opening/closing devices in which an intervening member is provided to a distal end of a push-pull chain, thereby opening and closing an accordion door according to the movement of the push-pull chain (for example, see Patent Document 3).

Engagement chain type lifting apparatuses are known from documents US 2010 /0229469, EP 2 000 426 A2 and US 2 574 657.

Further prior art documents are:
- -Japanese Patent Application No. 2009-49129 (See Paragraph [0042], Fig. 6),
- Japanese Patent Application No. 2007-269414 (See Paragraph [0009], Fig. 2),
- Japanese Patent Application No. H07-82953 (See Paragraph [0017], Fig. 3).

The mounting means connects the pair of engagement chains and the lifting table with each other at a position away from a position where the pair of engagement chains are integrated and disengaged from each other, in the foregoing conventional engagement chain type lifting apparatuses. Therefore, it is disadvantageously difficult to increase the stiffness of the pair of engagement chains, which have been engaged with each other and stiffened.

More specifically, the buckling strength of the pair of engagement integrated and stiffened chains decreases inversely with the square of the length of the stiffened part. Moreover, the length of the foregoing stiffened part becomes larger as the lifting length of the lifting table is extended, thereby reducing the buckling strength of the engagement chains. The engagement chains are more easily bent as the lifting length of the lifting table is extended. It disadvantageously becomes difficult to elevate a driven body such as the lifting table stably.

Further, bolts connecting a chain end portion mounting plate and a table mounting means with each other rattle in bolt holes in the foregoing conventional chain type lifting apparatuses. Therefore, it is disadvantageously difficult to improve the strength of the part of connecting the engagement chains and the lifting table together and to elevate the driven body stably, in terms of structure.

These problems can be raised not only in engagement chain type lifting apparatuses that are installed on an installation surface and elevate the lifting table vertically by stiffening the engagement chains from bottom to top, but also in drive units that are installed on a unit installation surface along the vertical direction and move a driven body, by horizontally stiffening the engagement chains, or drive units that are installed while hung from the ceiling and move the driven body by stiffening the pair of engagement chains from top to bottom.

An object of the present invention is to provide an engagement chain type advance/retract actuator which stably drives a driven body such as a lifting table.

According to the present invention an engagement chain type advance/retract actuator is provided particularly including a pair of engagement chains in each of which an inner link unit composed of hook-shaped inner tooth plates arranged spaced apart in a left and right pair is plurally coupled in a chain longitudinal direction by means of pairs of front and rear coupling pins press-fitted to pairs of front and rear pin holes of hook-shaped outer tooth plates adjacently arranged outside the inner link unit, the pair of engagement chains being integrated by meshing the inner tooth plates together facing each other while tilting against each other and the outer tooth plates together facing each other while tilting against each other, respectively, the pair of engagement chains being furcated by disengaging the mutually meshed inner tooth plates and the mutually meshed outer tooth plates, respectively, a drive sprocket advancing and retracting the pair of engagement chains, and a driven body mounted on chain distal ends of the pair of engagement chains via a mounting member and driven according to advancing and retracting movement of the pair of engagement chains. The pair of engagement chains has a chain stiff part in which the inner tooth plates and the outer tooth plates are mutually meshed constantly in a predetermined range from the chain distal ends along a stiffening direction of the pair of engagement chains. A reinforcing core reinforcing the chain stiff part is inserted and fitted in a prismatic hollow part of the chain stiff part. By this, the invention solves the foregoing problems.

According to an embodiment of the present invention is such that the reinforcing core is connected to the mounting member in the engagement chain type advance/retract actuator according to claim 1, thereby further solving the foregoing problems.

According to an embodiment of the present invention is such that in the engagement chain type advance/retract actuator according to claim 1 or 2, the reinforcing core is in contact with at least two surfaces facing each other of four surfaces defining the prismatic hollow part, thereby further solving the foregoing problems.

According to an embodiment of the present invention is such that in the engagement chain type advance/retract actuator according to anyone of claims 1 to 3, a chain guide plate separately guiding and moving the pair of engagement chains after the pair of engagement chains are disengaged from each other is arranged along a disengaging direction of the pair of engagement chains while overlapping with the prismatic hollow part and is in contact with a fitting insertion side end portion of the reinforcing core at a crotch area of the disengaged pair of engagement chains, thereby further solving the foregoing problems.

According to an embodiment of the present invention is such that in the engagement chain type advance/retract actuator according to anyone of claims 1 to 4, the reinforcing core has a chain supporting protruding portion extending between the pair of front and rear coupling pins press-fitted to the pair of front and rear pin holes of the outer tooth plates constituting the chain stiff part, thereby further solving the foregoing problems.

According to an embodiment of the present invention is such that in the engagement chain type advance/retract actuator according to anyone of claims 1 to 5, the reinforcing core is fixed to the chain stiff part, thereby further solving the foregoing problems.

According to an embodiment of the present invention is such that in the engagement chain type advance/retract actuator according to anyone of claims 1 to 6, the fitting insertion side end portion of the reinforcing core is chamfered, thereby further solving the foregoing problems.

The engagement chain type advance/retract actuator according to the present invention includes a pair of engagement chains in each of which an inner link unit composed of hook-shaped inner tooth plates arranged spaced apart in a left and right pair is plurally coupled in a chain longitudinal direction by means of pairs of front and rear coupling pins press-fitted to pairs of front and rear pin holes of hook-shaped outer tooth plates adjacently arranged outside the inner link unit, the pair of engagement chains being integrated by meshing the inner tooth plates together facing each other while tilting against each other and the outer tooth plates together facing each other while tilting against each other, respectively, the pair of engagement chains being furcated by disengaging the mutually meshed inner tooth plates and the mutually meshed outer tooth plates, respectively, a drive sprocket advancing and retracting the pair of engagement chains, and a driven body mounted on chain distal ends of the pair of engagement chains via a mounting member and driven according to advancing and retracting movement of the pair of engagement chains. As a result, not only can the driven body be driven according to stiffening and disengaging movement of the pair of engagement chains, but also particular effects corresponding with specific configurations as below can be exerted.

More specifically, the engagement chain type advance/retract actuator according to claim 1 of the present invention is such that the pair of engagement chains have a chain stiff part in which the inner tooth plates and the outer tooth plates are mutually meshed constantly in a predetermined range from the chain distal ends along a stiffening direction of the pair of engagement chains, and a reinforcing core reinforcing the chain stiff part is inserted and fitted in a prismatic hollow part of the chain stiff part, whereupon the reinforcing core is brought into close contact with the chain stiff part from the prismatic hollow part. Thus, the stiffness of the chain stiff part can be enhanced, and the bending of the chain stiff part can be avoided, and the driven body can be driven stably.

The engagement chain type advance/retract actuator according to claim 2 of the present invention is such that, in addition to the effect exerted by the engagement chain type advance/retract actuator according to claim 1, the reinforcing core is connected to the mounting member, whereupon the reinforcing member is connected to the driven body. Thus, the chain stiffness can be improved by fixing the reinforcing member to the driven body.

The engagement chain type advance/retract actuator according to claim 3 of the present invention is such that, in addition to the effect exerted by the engagement chain type advance/retract actuator according to claim 1 or 2, the reinforcing core is in contact with at least two surfaces facing each other of four surfaces defining the prismatic hollow part, whereupon the reinforcing member prevents the chain stiff part from bending along the normal direction of at least these two surfaces. As a result, the chain stiffness can be improved.

The engagement chain type advance/retract actuator according to claim 4 of the present invention is such that, in addition to the effect exerted by the engagement chain type advance/retract actuator according to anyone of claims 1 to 3, a chain guide plate separately guiding and moving the pair of engagement chains after the pair of engagement chains are disengaged from each other is arranged along a disengaging direction of the pair of engagement chains while overlapping with the prismatic hollow part and is in contact with a fitting insertion side end portion of the reinforcing core at a crotch area of the disengaged pair of engagement chains, whereupon the chain stiff part and the reinforcing core support the driven body when the pair of engagement chains are stiffened upward with respect to the apparatus installation surface. The advancing and retracting movement of the driven body can be thus stopped reliably and the driven body can be supported stably at the time when the pair of engagement chains are disengaged from each other and stored in the chain storage space while the stiff state of the chain stiff part is maintained.

The engagement chain type advance/retract actuator according to claim 5 of the present invention is such that, in addition to the effect exerted by the engagement chain type advance/retract actuator according to anyone of claims 1 to 4, the reinforcing core has a chain supporting protruding portion extending between the pair of front and rear coupling pins press-fitted to the pair of front and rear pin holes of the outer tooth plates constituting the chain stiff part, whereupon the chain supporting protruding portion prevents the rattling of the reinforcing core along the longitudinal direction of the chain stiff part, and prevents generation of clearance between the reinforcing core and the chain stiff part. The stiffness of the chain stiff part can thus be further enhanced, and the bending of the chain stiff part can be further avoided, and the driven body can be driven more stably.

The engagement chain type advance/retract actuator according to claim 6 of the present invention is such that, in addition to the effect exerted by the engagement chain type advance/retract actuator according to anyone of claims 1 to 5, the reinforcing core is fixed to the chain stiff part, whereupon the rattling of the reinforcing core against the chain stiff part can be prevented reliably. The stiffness of the chain stiff part can thus be further enhanced, and the bending of the chain stiff part can be further avoided, and the driven body can be driven more stably.

The engagement chain type advance/retract actuator according to claim 7 of the present invention is such that, in addition to the effect exerted by the engagement chain type advance/retract actuator according to anyone of claims 1 to 6, the fitting insertion side end portion of the reinforcing core is chamfered, whereupon even when planar shapes of the reinforcing core and the prismatic hollow part are made to coincide with each other and the reinforcing core and the prismatic hollow part are formed substantially the same size with respect to each other, the reinforcing core is inserted into the prismatic hollow part with no clearance therebetween at the time of assembling the apparatus without going through complicated processes and the buckling strength of the chains along both directions of the chain width direction and the chain disengaging direction is improved as compared with the case where the fitting insertion side end portion is not chamfered. As a result, the stiffness of the chain stiff part can thus be further enhanced, and the bending of the chain stiff part can be further avoided, and the driven body can be driven more stably.

### BRIEF DESCRIPTION OF THE DRAWINGS:

Fig. 1 is a perspective view showing advancing and retracting movement of an engagement chain type advance/retract actuator according to the present invention.
Fig. 2 is a perspective view showing a main configuration of the engagement chain type advance/retract actuator according to the present invention.
Fig. 3 is a perspective view showing an exploded state of chain units constituting engagement chains.
Fig. 4 is an enlarged front view of the engagement chain.
Fig. 5 is an enlarged side view of the engagement chains.
Fig. 6 is a plan view when the engagement chain is viewed from below.
Fig. 7 is a side view enlarging a fitting insertion side end portion of a reinforcing core.
Fig. 8 is a partial perspective view of the engagement chain type advance/retract actuator according to the present invention.
Fig. 9 is a side view enlarging a fitting insertion side end portion of a reinforcing core provided to an engagement chain type advance/retract actuator according to a modification of the present invention.

An engagement chain type advance/retract actuator of the present invention may be of any specific mode for being carried out as long as it includes a pair of engagement chains in each of which an inner link unit composed of hook-shaped inner tooth plates arranged spaced apart in a left and right pair is plurally coupled in a chain longitudinal direction by means of pairs of front and rear coupling pins press-fitted to pairs of front and rear pin holes of hook-shaped outer tooth plates adjacently arranged outside the inner link unit, the pair of engagement chains being integrated by meshing the inner tooth plates together facing each other while tilting against each other and the outer tooth plates together facing each other while tilting against each other, respectively, the pair of engagement chains being furcated by disengaging the mutually meshed inner tooth plates and the mutually meshed outer tooth plates, respectively, a drive sprocket advancing and retracting the pair of engagement chains, and a driven body mounted on chain distal ends of the pair of engagement chains via a mounting member and driven according to advancing and retracting movement of the pair of engagement chains, wherein the pair of engagement chains have a chain stiff part in which the inner tooth plates and the outer tooth plates are mutually meshed constantly in a predetermined range from the chain distal ends along a stiffening direction of the pair of engagement chains, and a reinforcing core reinforcing the chain stiff part is inserted and fitted in a prismatic hollow part of the chain stiff part.

Herein, the "predetermined range from the chain distal ends" of the present invention means a range from the chain distal ends to a length of at least a single piece or more of the inner tooth plates and outer tooth plates, respectively. A terminal end of the predetermined range is set for convenience unless it practically interferes with advancing and retracting movement of the driven body.

Further, the "prismatic hollow part" of the present invention may be a prismatic space defined by a pair of inner tooth plates which constitute the chain stiff part of the engagement chains and face each other along the chain width direction and bushes which are disposed between these inner tooth plates and in which a pair of coupling pins have been inserted and fitted, and also extending in the chain longitudinal direction. The prismatic hollow part may also be a prismatic space defined by the foregoing inner tooth plates and rollers in which a pair of coupling pins has been inserted.

In the engagement chain type advance/retract actuator of the present invention, the engagement chain may be composed of a single row chain unit, or may be composed of a plurality of chain units arranged in the chain width direction and mutually coupled via common coupling pins.

Such a chain unit may be constituted by including only one row of chain subunits having a group of a pair of mutually facing inner tooth plates along the chain width direction, or may be constituted by arranging the chain subunits in plural rows in the chain width direction.

In the case where the chain unit is constituted by arranging the chain subunits in plural rows in the chain width direction, chain subunits adjacent to each other in the chain width direction may share outer tooth plates therebetween.

Further, where the engagement chain is composed of plural rows of chain units, it is sufficient for the "reinforcing core" of the present invention to be inserted and fitted in at least one of prismatic hollow parts correspondingly formed at these chain units in plural rows. The reinforcing core may also be in a prismatic shape or in a cylindrical shape.

In the engagement chain advancing/retracting actuator of the present invention, the material constituting the reinforcing core is not restricted as long as it has a certain strength sufficient to reinforce the engagement chain, and may be an organic material such as plastic or a metallic material such as steel, for example.

The "chain supporting protruding portion" of the present invention may be provided to every space between the pair of front and rear coupling pins press-fitted to the pair of front and rear pin holes of the outer tooth plates constituting the chain stiff part, or may also be provided as corresponding to one of the spaces between the pairs of front and rear coupling pins plurally existing in the chain longitudinal direction in a continuous manner.

Further, the engagement chain type advance/retract actuator of the present invention has no problem in the advancing and retracting movement even if the installation surface is a floor surface in the stationary installation form or a ceiling surface in the suspension installation form, and further has no problem in the foregoing advancing and retracting movement even if the installation surface is a vertical wall surface in a cantilever supporting form.

### Embodiments:

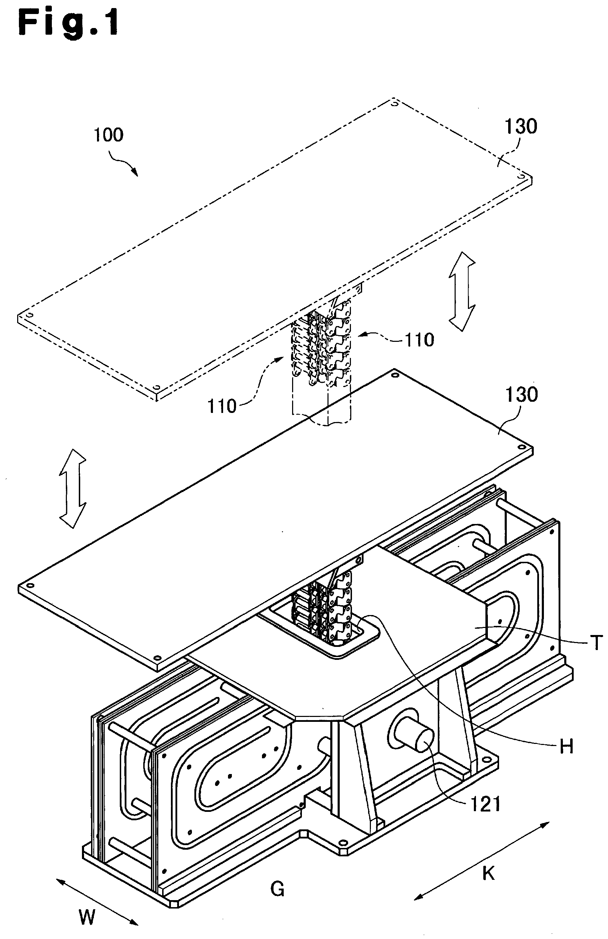

Hereinafter, an engagement chain type advance/retract actuator 100 of one embodiment of the present invention will be described based on Fig. 1 to Fig. 8.

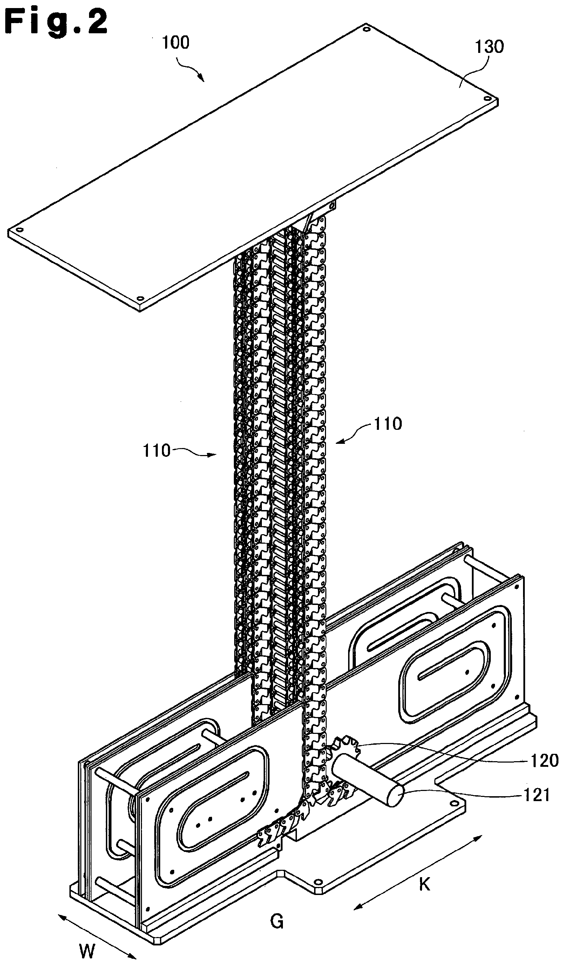

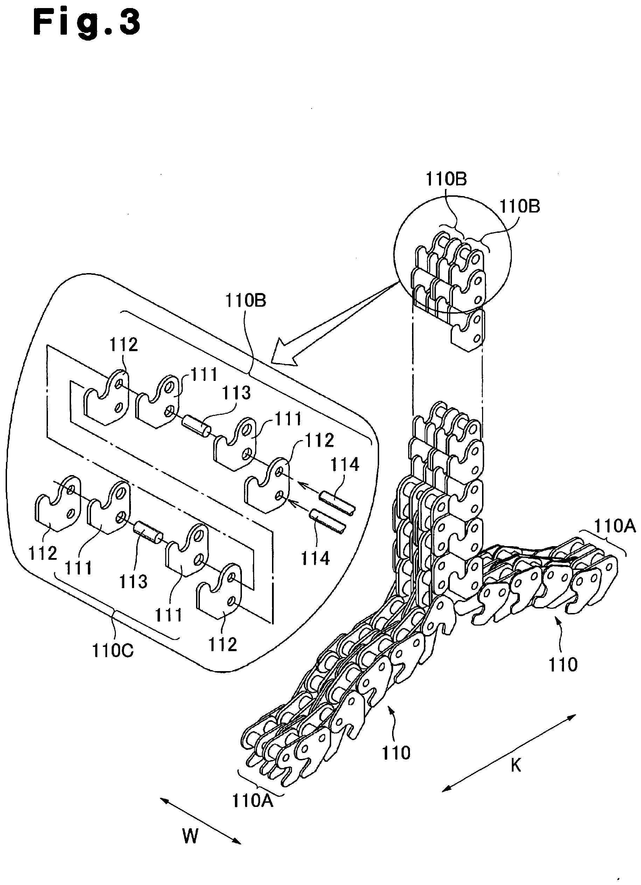

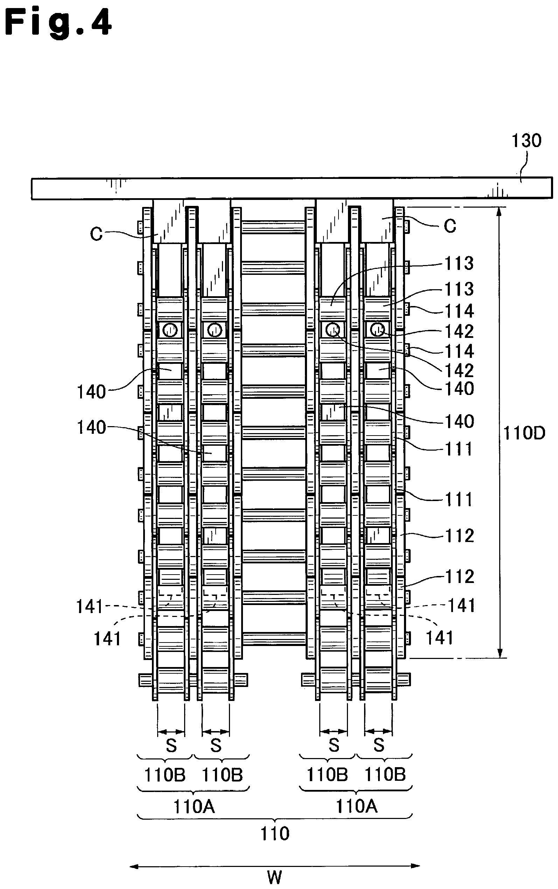

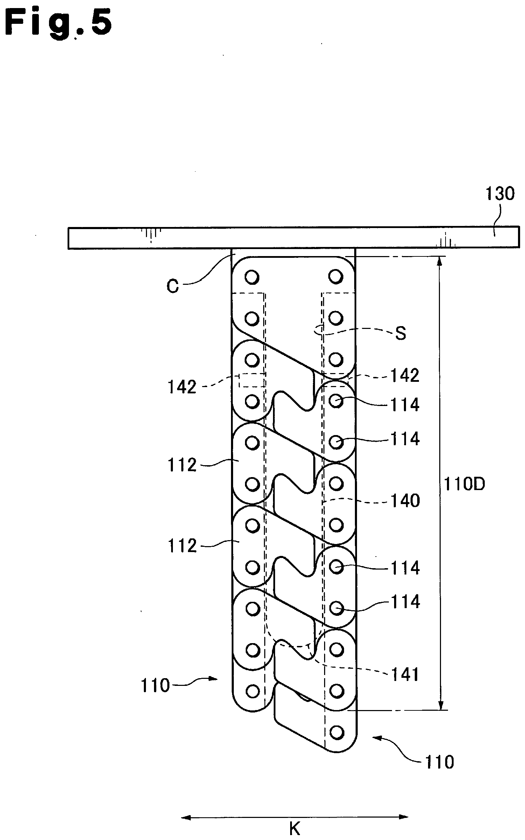

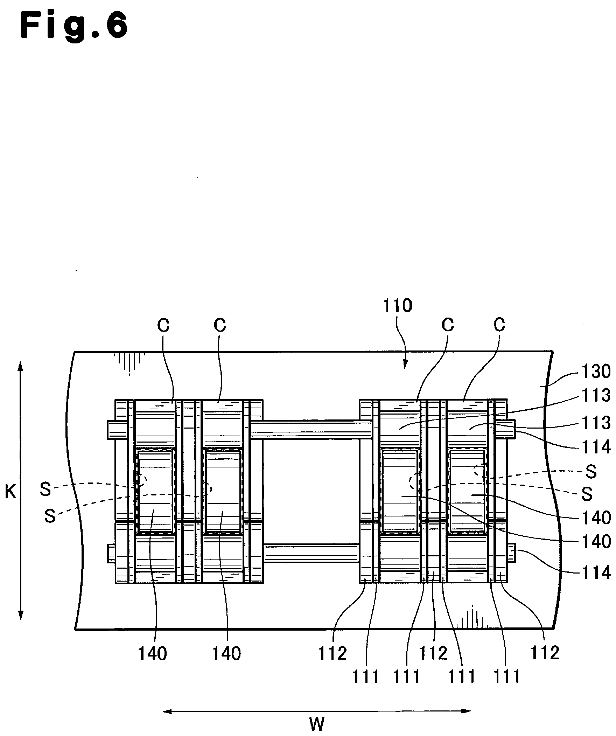

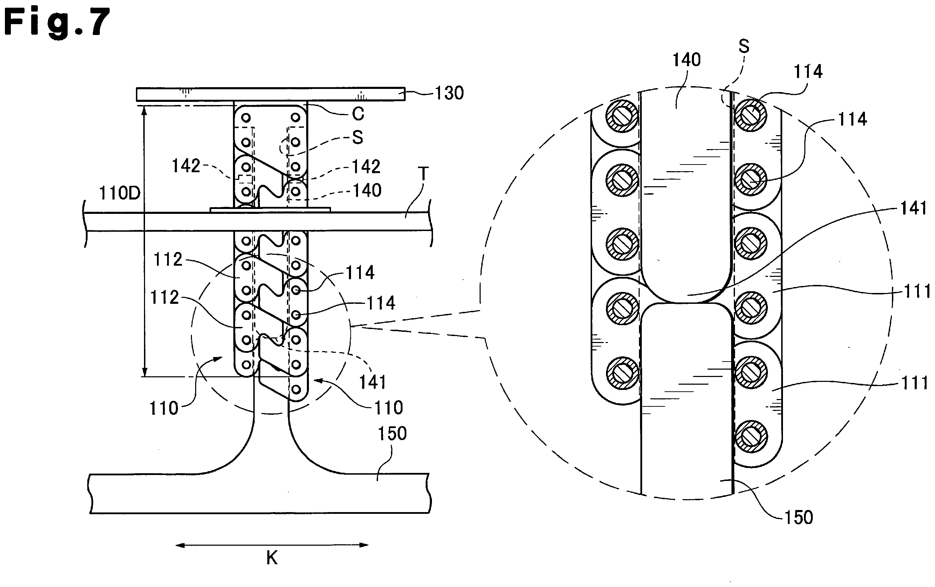

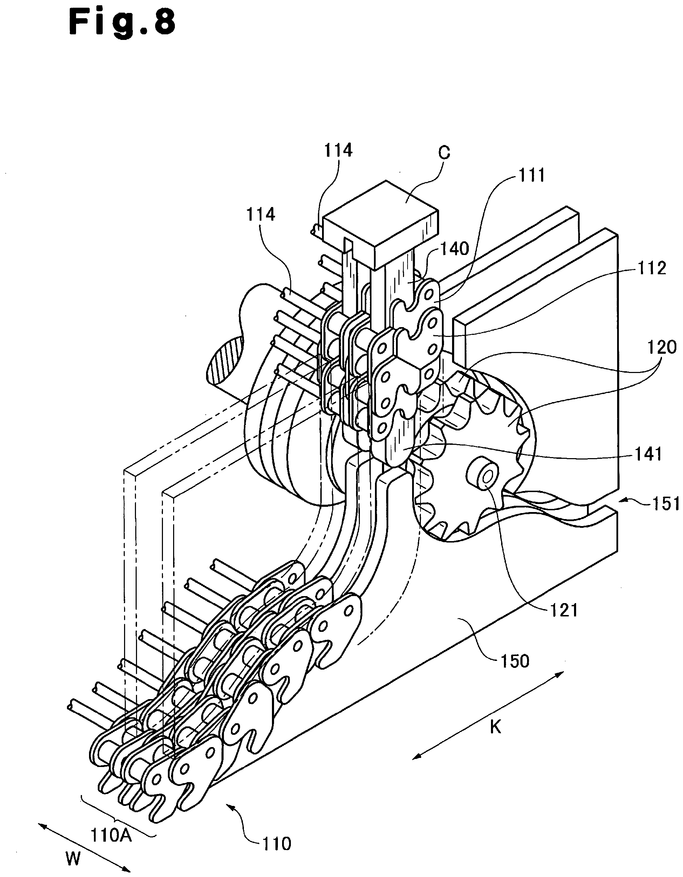

Herein, Fig. 1 is a perspective view showing advancing and retracting movement of an engagement chain type advance/retract actuator according to the present invention. Fig. 2 is a perspective view showing a main configuration of the engagement chain type advance/retract actuator according to the present invention. Fig. 3 is a perspective view showing an exploded state of chain units constituting engagement chains. Fig. 4 is an enlarged front view of the engagement chain. Fig. 5 is an enlarged side view of the engagement chains. Fig. 6 is a plan view when the engagement chain is viewed from below. Fig. 7 is a side view enlarging a fitting insertion side end portion of a reinforcing core. Fig. 8 is a partial perspective view of the engagement chain type advance/retract actuator according to the present invention.

First, the engagement chain type advance/retract actuator 100 shown in Fig. 1 according to this embodiment is stationarily installed on a work floor surface and vertically moves a driven body 130 such as a conveying table parallelly with respect to an installation surface G.

As shown in Fig. 1 to Fig. 8, the engagement chain type advance/retract actuator 100 of this embodiment includes a pair of engagement chains 110 in each of which an inner link unit 110C composed of hook-shaped inner tooth plates 111 arranged spaced apart in a left and right pair is plurally coupled in a chain longitudinal direction by means of pairs of front and rear coupling pins 114 press-fitted to pairs of front and rear pin holes of hook-shaped outer tooth plates 112 adjacently arranged outside the inner link unit 110C. The engagement chains 110 are integrated by meshing the inner tooth plates 111 together facing each other while tilting against each other and the outer tooth plates 112 together facing each other while tilting against each other, respectively. The engagement chains 110 are also furcated by disengaging the mutually meshed inner tooth plates 111 and the mutually meshed outer tooth plates 112, respectively. The engagement chain type advance/retract actuator 100 also includes a drive sprocket 120 advancing and retracting the pair of engagement chains 110 and 110 and a driven body 130 mounted on chain distal ends via mounting members C and driven according to advancing and retracting movement of the pair of engagement chains 110 and 110. By this, the driven body 130 is configured to be driven according to stiffening and disengaging movement of the pair of engagement chains 110 and 110.

In the engagement chain type advance/retract actuator 100 of this embodiment, as shown in Fig. 1 to Fig. 8, each of the chain units 110A in plural rows constituting the engagement chain 110 is constituted by arranging chain subunits 110B in plural rows in a chain width direction W. The chain subunit 110B includes an inner link unit 110C composed of a pair of inner tooth plates 111 arranged in parallel in the chain width direction W in a left and right pair and press-fitted with a pair of front and rear bushes 113, and hook-shaped outer tooth plates 112 adjacently arranged outside the inner link unit 110C.

The pair of engagement chains 110 and 110 are driven to be stiffened and disengaged from each other along a chain disengaging direction K within a chain through hole H of a chain through plate T by a drive sprocket 120 engaged with one of the pair of engagement chains 110 and 110 and rotating about a driving shaft 121, thereby advancing and retracting the driven body 130.

Next, a configuration by which the engagement chain type advance/retract actuator 100 of this embodiment is most characterized will be described.

That is, the pair of engagement chains 110 and 110 has a chain stiff part 110D in which the inner tooth plates 111 and the outer tooth plates 112 are mutually engaged constantly in a predetermined range from chain distal ends along the stiffening direction of the pair of engagement chains 110 and 110, Prismatic reinforcing cores 140 reinforcing the chain stiff part 110D are inserted and fitted in prismatic hollow parts S of the chain stiff part 110D.

With this, the reinforcing cores 140 are brought in close contact with the chain stiff part 110D from the prismatic hollow parts S. Accordingly, the engagement chain type advance/retract actuator 100 of this embodiment is configured such that the stiffness of the chain stiff part 110D is enhanced, and the bending of the chain stiff part 110D is avoided, and the driven body 130 is driven stably.

In addition, the reinforcing members 140 are connected to the mounting members C, thereupon being connected to the driven body 130. Thus, the engagement chain type advance/retract actuator 100 is configured such that the chain stiffness is improved by fixing the reinforcing members 140 to the driven body 130.

Further, it is sufficient in this embodiment that the reinforcing core 140 is in contact with at least two surfaces of four surfaces defining the prismatic hollow part S and reinforces the chain stiff part 110D.

According to the reinforcing core 140 in contact with at least two surfaces of four surfaces defining the prismatic hollow part S as above, the bending of the chain stiff part along at least the normal direction of the two surfaces, more specifically, the chain disengaging direction K or the chain width direction W is avoided. Therefore, the chain stiffness in the engagement chain type advance/retract actuator 100 is enhanced.

Moreover, as shown in Fig. 5 to Fig. 8, a fitting insertion side end portion 141 of the reinforcing core 140 is chamfered in the engagement chain type advance/retract actuator 100 of this embodiment, whereupon even when planar shapes of the reinforcing core 140 and the prismatic hollow part S are made to coincide with each other and the reinforcing core and the prismatic hollow part are formed substantially the same size with respect to each other, the reinforcing core 140 is inserted into the prismatic hollow part S with no clearance therebetween at the time of assembling the apparatus without going through complicated processes and the buckling strength of the chain along both directions of the chain width direction Wand the chain disengaging direction K is improved as compared with the case where the fitling insertion side end portion 141 is not charhfered. Accordingly, the stiffness of the chain stiff part 110D is further enhanced, and the bending of the chain stiff part 110D is further avoided, and the driven body 130 is driven more stably.

In the engagement chain type advance/retract actuator 100 of this embodiment, as shown in Fig. 7 and Fig. 8, a chain guide plate 150 separately guiding and moving the pair of engagement chains 110 and 110 having been disengaged from each other is arranged along the chain disengaging direction K of the pair of engagement chains 110 and 110 while overlapping with the prismatic hollow part S. The guide plate is in contact with the fitting insertion side end portion 141 of the reinforcing core 140 at a crotch area of the pair of engagement chains 110 and 110.

With this, the chain stiff part 110D and the reinforcing cores 140 support the driven body 130 when the pair of engagement chains 110 and 110 are stiffened upward with respect to the apparatus installation surface G. Thus, the engagement chain type advance/retract actuator 100 of this embodiment is configured such that the advancing and retracting movement of the driven body 130 is stopped reliably and the driven body 130 is supported stably at the time when the pair of engagement chains 110 and 110 are disengaged from each other and stored in a chain storage space 151 while the stiff state of the chain stiff part 110D is maintained.

In the engagement chain type advance/retract actuator 100 of this embodiment, as shown in Fig. 4, Fig. 5, and Fig. 7, the reinforcing core 140 has a chain supporting protruding portion 142 extending between the pair of front and rear coupling pins 114 press-fitted to the pair of front and rear pin holes of the outer tooth plates 112 constituting the chain stiff part 110D.

Thus, the chain supporting protruding portion 142 prevents the rattling of the reinforcing core 140 along the longitudinal direction of the chain stiff part 110D, and prevents generation of clearance between the reinforcing core 140 and the chain stiff part 110D. Therefore, the engagement chain type advance/retract actuator 100 of this embodiment is configured such that the stiffness of the chain stiff part 110D is further enhanced, and the bending of the chain stiff part 110D is further avoided, and the driven body 130 is driven more stably.

Further, the reinforcing core 140 may be fixed to the chain stiff part 110D via an adhesive or by fitting the chain supporting protruding portion 142 between the pair of front and rear coupling pins 114 in the engagement chain type advance/retract actuator 100 of this embodiment.

With this, the rattling of the reinforcing core 140 against the chain stiff part 110D can be prevented reliably. Therefore, in the engagement chain type advance/retract actuator 100 of this embodiment, the stiffness of the chain stiff part 110D is further enhanced, and the bending of the chain stiff part 110D is further avoided, and the driven body 130 is driven more stably.

In the engagement chain type advance/retract actuator 100 of this embodiment thus obtained, the pair of engagement chains 110 and 110 have the chain stiff part 110D in which the inner tooth plates 111 and the outer tooth plates 112 are mutually meshed constantly in a predetermined range from the chain distal ends along the stiffening direction of the pair of engagement chains 110 and 110. The reinforcing cores 140 reinforcing this chain stiff part 110D are inserted and fitted in the prismatic hollow parts S of the chain stiff part 110D. As a result, effects thereby are significant such as the stiffness of the chain stiff part 110D is enhanced, and the bending of the chain stiff part 110D is avoided, and the engagement chain type advance/retract actuator 100 can drive the driven body 130 stably.

### [Modification]

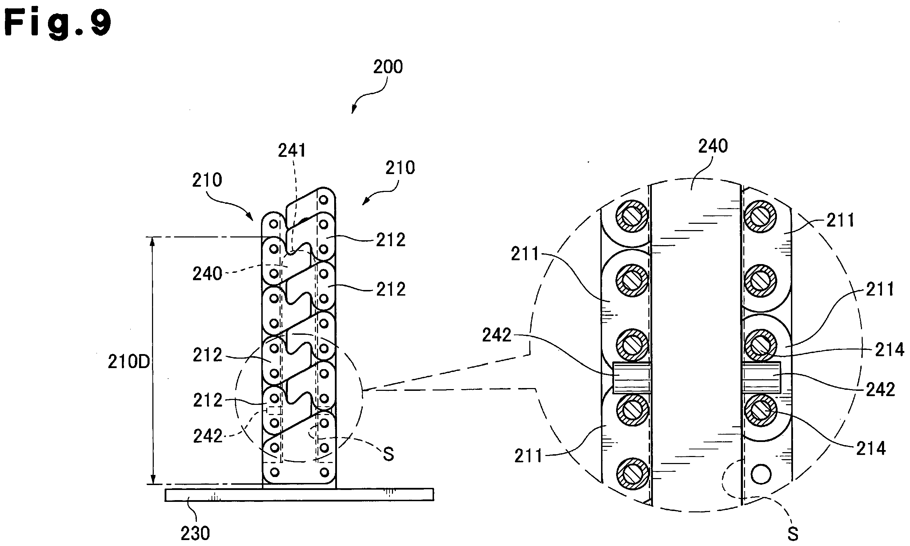

Next, an engagement chain type advance/retract actuator 200 according to a modification of the present invention will be described based on Fig. 9.

Herein, Fig. 9 is a side view enlarging a fitting insertion side end portion of a reinforcing core provided to the engagement chain type advance/retract actuator according to the modification of the present invention.

In the engagement chain type advance/retract actuator 200 according to the modification of the present invention described below, only a specific mode of being installed on the installation surface while hung from the installation surface, and advancing and retracting the driven body vertically differs from the foregoing engagement chain type advance/retract actuator 100. Other configurations are exactly the same as those of the foregoing engagement chain type advance/retract actuator 100. Thus, detailed descriptions thereof will be omitted, replacing numerals of symbols in the one hundreds with the two hundreds.

In the engagement chain type advance/retract actuator 200 according to the modification of the present invention, as shown in Fig. 9, a reinforcing core 240 has a chain supporting protruding portion 242 extending between a pair of front and rear coupling pins 214 press-fitted to a pair of front and rear pin holes of outer tooth plates 212 constituting a chain stiff part 210D, whereupon a pair of engagement chains 210 and 210 and a driven body 230 are fixed to each other via not only the mounting members C but also the chain supporting protruding portions 242. Consequently, falling off of the pair of engagement chains 210 and 210 and the driven body 230 is prevented, and the driven body 230 is advanced and retracted safely and stably.

In the engagement chain type advance/retract actuator 200 of this modification thus obtained, the reinforcing core 240 has the chain supporting protruding portion 242 extending between the pair of front and rear coupling pins 214 press-fitted to the pair of front and rear pin holes of the outer tooth plates 212 constituting the chain stiff part 210D. Thus, effects thereby are significant such as falling off of the pair of engagement chains 210 and 210 and the driven body 230 can be prevented, and the driven body 230 can be advanced and retracted safely and stably.

### DESCRIPTION OF SYMBOLS

- 100, 200: engagement chain type advance/retract actuator
- 110,210: engagement chain
- 110A: chain unit
- 110B: chain subunit
- 110C: inner link unit
- 110D, 210D: chain stiff part
- 111,211: inner tooth plate
- 112, 212: outer tooth piate
- 113: bush
- 114, 214: coupling pin
- 120: drive sprocket
- 121: driving shaft
- 130, 230: driven body
- 140, 240: reinforcing core
- 141, 241: fitting insertion side end portion
- 142, 242: chain supporting protruding portion
- 150: chain guide piate
- 151: chain storage space
- C: mounting member
- G: installation surface
- H: chain through hole
- K: chain disengaging direction
- S: prismatic hollow part
- T: chain through plate
- W: chain width direction

## Claims

1. An engagement chain type advance/retract actuator (100, 200) comprising:
a pair of engagement chains (110, 210) in each of which an inner link unit (110C) composed of hook-shaped inner tooth plates (111, 211) arranged spaced apart in a left and right pair is plurally coupled in a chain longitudinal direction by means of pairs of front and rear coupling pins (114, 214) press-fitted to pairs of front and rear pin holes of hook-shaped outer tooth plates (112, 212) adjacently arranged outside the inner link unit (110C), the pair of engagement chains (110, 210) being integrated by meshing the inner tooth plates (111, 211) together facing each other while tilting against each other and the outer tooth plates (112, 212) together facing each other while tilting against each other, respectively, the pair of engagement chains (110, 210) being furcated by disengaging the mutually meshed inner tooth plates (111, 211) and the mutually meshed outer tooth plates(112, 212), respectively;
a drive sprocket (120) advancing and retracting the pair of engagement chains(110, 210); and
a driven body (130, 230) mounted on chain distal ends of the pair of engagement chains (110, 210) via a mounting member (C) and driven according to advancing and retracting movement of the pair of engagement chains(110, 210), the actuator (100, 200) **characterized in that**:
the pair of engagement chains (110, 210) have a chain stiff part (110D, 210D) in which the inner tooth plates (111, 211) and the outer tooth plates (112, 212) are mutually meshed constantly in a predetermined range from the chain distal ends along a stiffening direction of the pair of engagement chains (110, 210); and
a reinforcing core (140, 240) reinforcing the chain stiff part (110D, 210D) is inserted and fitted in a prismatic hollow part (S) of the chain stiff part(110D, 210D).

2. The engagement chain type advance/retract actuator (100, 200) according to claim 1, wherein the reinforcing core (140, 240) is connected to the mounting member (C).

3. The engagement chain type advance/retract actuator (100, 200) according to claim 1 or 2, wherein the reinforcing core (140, 240) is in contact with at least two surfaces facing each other of four surfaces defining the prismatic hollow part (S).

4. The engagement chain type advance/retract actuator (100, 200) according to any one of claims 1 to 3, wherein a chain guide plate (150) separately guiding and moving the pair of engagement chains (110, 210) after the pair of engagement chains (110, 210) are disengaged from each other is arranged along a disengaging direction (K) of the pair of engagement chains (110, 210) while overlapping with the prismatic hollow part (S) and is in contact with a fitting insertion side end portion (141, 241) of the reinforcing core 8140, 240) at a crotch area of the disengaged pair of engagement chains (110, 210).

5. The engagement chain type advance/retract actuator (100, 200) according to any one of claims 1 to 4, wherein the reinforcing core (140, 240) has a chain supporting protruding portion (142, 242) extending between the pair of front and rear coupling pins (114, 214) press-fitted to the pair of front and rear pin holes of the outer tooth plates (112, 212) constituting the chain stiff part (110D, 210D).

6. The engagement chain type advance/retract actuator (100, 200) according to any one of claims 1 to 5, wherein the reinforcing core (140, 240) is fixed to the chain stiff part (110D, 210D).

7. The engagement chain type advance/retract actuator (100, 200) according to any one of claims 1 to 6, wherein the fitting insertion side end portion (141, 241) of the reinforcing core (140) is chamfered.

## Patentansprüche

1. Vorschub-/Rückzugsaktor (100, 200) vom Eingreifkettentyp, der aufweist:
ein Paar von Eingreifketten (110, 210), bei denen jeweils eine innere Gliedeinheit (110C), die aus hakenförmigen, in einem linken und rechten Paar beabstandet angeordneten inneren zahnplatten (111, 211) zusammengesetzt ist, in einer Kettenlängsrichtung mittels Paaren von vorderen und hinteren Kopplungsbolzen (114, 214) mehrfach gekoppelt ist, die in Paare von vorderen und hinteren Bolzenlöchern von hakenförmigen äußeren Zahnplatten (112, 212), die außerhalb der inneren Gliedeinheit (110C) benachbart angeordnet sind, eingepresst sind, wobei das Paar von Eingreifketten (110, 210) integriert ist, indem die inneren Zahnplatten (111, 211) während sie gegeneinander geneigt werden, einander zugewandt sind bzw. die äußeren Zahnplatten (112, 212), während sie gegeneinander geneigt werden, einander zugewandt sind, jeweils miteinander in Eingriff gebracht werden, wobei das Paar von Eingreifketten (110, 210) durch Lösen der miteinander in Eingriff stehenden inneren Zahnplatten (111, 211) bzw. der miteinander in Eingriff stehenden äußeren Zahnplatten (112, 212) jeweils gegabelt wird;
ein Antriebskettenrad (120), das das Paar von Eingreifketten (110, 210) vorwärts und rückwärts bewegt; und
einen angetriebenen Körper (130, 230), der über ein Befestigungselement (C) an distalen Kettenenden des Paars von Eingreifketten (110, 210) montiert ist und entsprechend der Vorwärts- und Rückwärtsbewegung des Paars von Eingreifketten (110, 210) angetrieben wird, wobei der Aktor (100, 200) **dadurch gekennzeichnet ist, dass**
das Paar von Eingreifketten (110, 210) einen steifen Kettenteil (110D, 210D) aufweist, in dem die inneren Zahnplatten (111, 211) und die äußeren Zahnplatten (112, 212) in einem vorgegebenen Bereich von den distalen Kettenenden entlang einer Versteifungsrichtung des Paars von Eingreifketten (110, 210) konstant miteinander in Eingriff stehen; und
ein Verstärkungskern (140, 240), der den steifen Kettenteil (110D, 210D) verstärkt, in einen prismatischen hohlen Teil (S) des steifen Kettenteils (110D, 210D) eingesetzt und montiert ist.

2. Vorschub-/Rückzugsaktor (100, 200) vom Eingreifkettentyp nach Anspruch 1, wobei der Verstärkungskern (140, 240) mit dem Befestigungselement (C) verbunden ist.

3. Vorschub-/Rückzugsaktor (100, 200) vom Eingreifkettentyp nach Anspruch 1 oder 2, wobei der Verstärkungskern (140, 240) mit mindestens zwei einander zugewandten Flächen von vier Flächen, die den prismatischen hohlen Teil (S) definieren, in Kontakt steht.

4. Vorschub-/Rückzugsaktor (100, 200) vom Eingreifkettentyp nach einem der Ansprüche 1 bis 3, wobei eine Kettenführungsplatte (150), die das Paar von Eingreifketten (110, 210) separat führt und bewegt, nachdem das Paar von Eingreifketten (110, 210) voneinander gelöst sind, entlang einer Lösungsrichtung (K) des Paares von Eingreifketten (110, 210) angeordnet ist, während es sich mit dem prismatischen hohlen Teil (S) überlappt, und an einem Gabelungsbereich des gelösten Paares von Eingreifketten (110, 210) mit einem passenden einführseitigen Endteil (141, 241) des Verstärkungskerns (140, 240) in Kontakt steht.

5. Vorschub-/Rückzugsaktor (100, 200) vom Eingreifkettentyp nach einem der Ansprüche 1 bis 4, wobei der Verstärkungskern (140, 240) einen kettentragenden vorstehenden Abschnitt (142, 242) aufweist, der sich zwischen dem Paar von vorderen und hinteren Kopplungsbolzen (114, 214) erstreckt, die in das Paar von vorderen und hinteren Bolzenlöchern der äußeren Zahnplatten (112, 212) eingepresst sind, die den steifen Kettenteil (110D, 210D) bilden.

6. Vorschub-/Rückzugsaktor (100, 200) vom Eingreifkettentyp nach einem der Ansprüche 1 bis 5, wobei der Verstärkungskern (140, 240) an dem steifen Kettenteil Teil (110D, 210D) befestigt ist.

7. Vorschub-/Rückzugsaktor (100, 200) vom Eingreifkettentyp nach einem der Ansprüche 1 bis 6, wobei der passende einführseitige Endteil (141, 241) des Verstärkungskerns (140) abgeschrägt ist.

## Revendications

1. Actionneur d'avancement ou de recul du type à chaîne d'engrenage (100, 200) comprenant :
une paire de chaînes d'engrenage (110, 210) dans chacune desquelles une unité de liaison intérieure (110C) composée de plaques dentées intérieures en forme de crochet (111, 211) disposées de manière espacée en une paire gauche et droite est couplée plusieurs fois dans une direction longitudinale de chaîne au moyen de paires de goupilles de raccord avant et arrière (114, 214) emmanchées à force dans des paires de trous de goupille avant et arrière de plaques dentées extérieures en forme de crochet (112, 212) disposées de manière adjacente à l'extérieur de l'unité de liaison intérieure (110C), la paire de chaînes d'engrenage (110, 210) étant intégrée par engrenage des plaques dentées intérieures (111, 211) l'une dans l'autre en se faisant face tout en étant inclinées l'une par rapport à l'autre et par engrenage des plaques dentées extérieures (112, 212) l'une dans l'autre en se faisant face tout en étant inclinées l'une par rapport à l'autre, respectivement, la paire de chaînes d'engrenage (110, 210) étant divisée par désengrenage des plaques dentées intérieures engrenées mutuellement (111, 211) et des plaques dentées extérieures engrenées mutuellement (112, 212), respectivement ;
un pignon moteur (120) avançant et reculant la paire de chaînes d'engagement (110, 210) ; et
un corps entraîné (130, 230) monté sur des extrémités distales de chaîne de la paire de chaines d'engrenage (110, 210) via un élément de montage (C) et entraîné selon un mouvement d'avancement et de recul de la paire de chaînes d'engagement (110, 210), l'actionneur (100, 200) étant **caractérisé en ce que** :
la paire de chaînes d'engagement (110, 210) a une partie rigide de chaîne (110D, 210D) dans laquelle les plaques dentées intérieures (111, 211) et les plaques dentées extérieures (112, 212) sont engrenées mutuellement constamment dans une plage prédéterminée depuis les extrémités distales de chaîne le long d'une direction de raidissement de la paire de chaînes d'engagement (110, 210) ; et
une partie centrale de renforcement (140, 240) renforçant la partie rigide de chaîne (110D, 210D) est insérée et emmanchée dans une partie creuse prismatique (S) de la partie rigide de chaîne (110D, 210D).

2. Actionneur d'avancement ou de recul du type à chaîne d'engrenage (100, 200) selon la revendication 1, selon lequel la partie centrale de renforcement (140, 240) est reliée à l'élément de montage (C).

3. Actionneur d'avancement ou de recul du type à chaîne d'engrenage (100, 200) selon l'une des revendications 1 ou 2, selon lequel la partie centrale de renforcement (140, 240) est en contact avec au moins deux surfaces se faisant face parmi quatre surfaces définissant la partie creuse prismatique (S).

4. Actionneur d'avancement ou de recul du type à chaîne d'engrenage (100, 200) selon l'une des revendications 1 à 3, selon lequel une plaque de guidage de chaîne (150) guidant séparément et déplaçant les deux chaînes d'engrenage (110, 210) après que les deux chaînes d'engrenage (110, 210) ont été désengrenées l'une de l'autre est disposée le long d'une direction de désengrenage (K) de la paire de chaînes d'engrenage (110, 210) tout en chevauchant la partie creuse prismatique (S) et est en contact avec une partie d'extrémité latérale d'insertion de montage (141, 241) de la partie centrale de renforcement (140, 240) au niveau d'une zone de fourche de la paire désengrenée de chaînes d'engrenage (110, 210).

5. Actionneur d'avancement ou de recul du type à chaîne d'engrenage (100, 200) selon l'une des revendications 1 à 4, selon lequel la partie centrale de renforcement (140, 240) comporte une partie saillante de support de chaîne (142, 242) qui s'étend entre la paire de goupilles de raccord avant et arrière (114, 214) emmanchée à force dans la paire de trous de goupille avant et arrière des plaques dentées extérieures (112, 212) constituant la partie rigide de chaîne (110D, 210D).

6. Actionneur d'avancement ou de recul du type à chaîne d'engrenage (100, 200) selon l'une des revendications 1 à 5, selon lequel la partie centrale de renforcement (140, 240) est attachée à la partie rigide de chaîne (110D, 210D).

7. Actionneur d'avancement ou de recul du type à chaîne d'engrenage (100, 200) selon l'une des revendications 1 à 6, selon lequel la partie d'extrémité latérale d'insertion de montage (141, 241) de la partie centrale de renforcement (140, 240) est chanfreinée.
